(19) Europäisches Patentamt
European Patent Office
Office européen des brevets

(11) Publication number: 0 372 423 A2

(12) **EUROPEAN PATENT APPLICATION**

(21) Application number: 89122227.5

(51) Int. Cl.5: C08F 283/02

(22) Date of filing: 01.12.89

(30) Priority: 07.12.88 JP 309440/88
24.01.89 JP 14842/89

(43) Date of publication of application:
13.06.90 Bulletin 90/24

(84) Designated Contracting States:
AT BE CH DE ES FR GB GR IT LI LU NL SE

(71) Applicant: DIAFOIL COMPANY, LIMITED
3-2, Marunouchi 2-chome
Chiyoda-ku Tokyo(JP)

(72) Inventor: Endo, Kazuo
3-3 Tsutsujigaoka Midori-ku
Yokohama-shi Kanagawa-ken(JP)
Inventor: Sakamoto, Seiji
1-15-9 Ogawa
Machida-shi Tokyo(JP)
Inventor: Kunugihara, Kazuhiro
2-13-2 Naruse
Machida-shi Tokyo(JP)
Inventor: Komiyama, Megumi
2-6-3 Tachibanadai Midori-ku
Yokohama-shi Kanagawa-ken(JP)

(74) Representative: Patentanwälte TER MEER - MÜLLER - STEINMEISTER & PARTNER
Mauerkircherstrasse 45
D-8000 München 80(DE)

(54) **Polyester composition.**

(57) The present invention relates to a polyester composition comprising polyester and 0.005 to 1% by weight, based on said composition, of particles having an average particle size of 0.01 to 2 µm which comprises a crosslinked polymer having ethylene glycol unit in the molecular chain thereof, or 0.005 to 1% by weight, based on said composition, of multi-layer organic particles having an average particle size of 0.05 to 3 µm which comprises a core organic particle and a coating layer of said crosslinked polymer, the loss in weight after heat treatment at 300°C for 30 min of said crosslinked polymer particles and said multi-layer organic particles being not higher than 30%.

The film obtained from the polyester composition of the present invention has an excellent running property, and abrasion resistance, and is quite useful for various practical uses. Also the film obtained from the polyester composition of the present invention has an excellent transparency and can be used for bottles or similar packaging materials.

EP 0 372 423 A2

# POLYESTER COMPOSITION

## BACKGROUND OF THE INVENTION

The present invention relates to a polyester composition which can provide a film which is small in the amount of large protuberances and excellent in running properties and abrasion resistance.

Polyester, the typical example of which is polyethylene terephthalate, is applied to various uses, for example, base for magnetic recording medium, film for condenser, film for packaging, film for printing, film for insulator, photographic film, because of its excellent mechanical and electric properties, chemical resistance and dimension stability.

It is generally necessary for a polyester film to have good working properties at handling a film, though the properties required are varied corresponding to their use. In order to provide a film with good working properties, it is necessary to improve running properties thereof, that is, to reduce friction coefficient thereof.

When a polyester film is used for magnetic recording medium such as audio-tape, video-tape, computer-tape, the deterioration of running properties or abrasion resistance tends to generate scratches, because of frequent friction between coating roller and film surface when forms magnetic layers.

When a polyester film is provided with a magnetic layer and used as video-tape, computer-tape etc., friction between the tape and many guides, recording or reproducing head at the time of drawing a tape from a reel or casette, winding operation and anothers may cause the generation of white powdery materials by falling of particles at the surface of polyester films, if the polyester film is poor in running property and abrasion resistance. Accordingly, the missing of magnetic recording signals, that is, dropouts often occur.

The various methods have been proposed to improve these properties.

The method which is now most generally adopted is to add inactive materials into the films.

The above method is classified into two as described below.

One is called 'deposition method' . This method is to deposit small particles which are insoluble in polyester under presence or absence of phosphorous compounds by adding one or more kinds of metal compounds soluble in ethylene glycol, for example, calcium compounds, lithium compounds, during ester. exchange reaction or before or after esterification.

The other is called 'adding method'. This method is to add organic or inorganic particles, for example, calcium carbonate, kaolin, talc, silica after or without atomization during the synthesis or molding of polyester. This method is superior than the 'deposition-method', because a size and a quantity of the particles added can be controlled, and these particles are hardly divided during stretching.

Moreover, in this method, it is also proposed to use organic crosslinked polymer particles in order to improve the quality of film.

For example, a method is disclosed which improve an affinity between polyester and particles by using crosslinked polymer particles of methyl methacrylatedivinyl benzene copolymer thereby bonding polyester covalently with a part of the particles in Japanese Patent Application Laid-Open (KOKAI) No. 55-99948 (1980). And, other methods including the same idea as the above disclosure, wherein the affinity between polyester and particles is improved by using particles of a crosslinked copolymer of methyl methacrylate/butyl acrylate/hydroxymethyl acrylate/divinyl benzene, and the fact that the above particles obtained from emulsion polymerization have a narrow particle size distribution have been disclosed in Japanese Patent Application Laid-Open (KOKAI) No. 59-217755 (1984), and 61-217229 (1986).

However, in the various fields such as magnetic recording medium, condenser film, the more improvement of the film properties is desired because they are going to become miniature and precise with recent remarkable progress of technology.

The present inventors have found, as the results of the investigation to solve the above problems, that a polyester composition obtained from adding specific crosslinked polymer particles or multilayer-organic particles covered with the above specific crosslinked polymer to polyester is enable to provide a film remarkably improved in running properties and abrasion resistance.

## SUMMARY OF THE INVENTION

In an aspect of the present invention, there is provided a polyester composition comprising polyester

and 0.005 to 1% by weight, based on said composition, of particles having an average particle size of 0.01 to 2 µm which comprises a crosslinked polymer having ethylene glycol units in the molecular chain thereof and showing a loss in weight of not higher than 30% after heat treatment at 300 °C for 30 min, or 0.005 to 1% by weight, based on said composition, of multi-layer organic particles having an average particle size of 0.05 to 3 µm which comprises a core organic particle and a coating layer of said crosslinked polymer.

## BRIEF DESCRIPTION OF THE DRAWINGS

Fig. 1 illustrates a tape running system for evaluating the coefficient of kinetic friction against metals.
(I): 6 mmø fixed hard chromium-plated pin;
(II): inlet tension meter;
(III): outlet tension meter; $\theta = 135°$ C.
Fig. 2 illustrates a tape running system for evaluating wear resistance.
(IV): 6 mmø fixed hard chromium-plated pin;
(V): tension meter; $\theta = 135°$ C.

## DETAILED DESCRIPTION OF THE INVENTION

In the present invention, polyester is defined as the polymer constituted mainly from ethylene terephthalate units, for example, polyethylene terephthalate homopolymer or copolymer constituted from 80 mol% or more of ethylene terephthalate unit.

The crosslinked polymer used in the present invention has ethylene glycol unit ($-CH_2CH_2O-$) in its molecular chain. The content of the ethylene glycol unit in the crosslinked polymer is usually in the range of 3 to 38 weight %, and preferably 5 to 25 weight %. If the content is less than 3 weight %, it is not preferred owing to agglomeration of secondary particles formed when added to polyester. On the other hand, if the content is more than 38 weight %, no more effective improvement is expected and not adequate for practical use.

The affinity between the polyester and the particles described above increases owing to the above ethylene glycol unit contained in the crosslinked polymer.

A part of the ethylene glycol unit in the crosslinked polymer reacts with the polyester. Therefore, the particles of the crosslinked polymer and the multi-layer organic particles having a coating layer of the crosslinked polymer can be dispersed in the polyester as the particles bonded firmly with the polyester. Therefore, the falling of the particles from a film which is generated by friction and abrasion of the film with a magnetic head or guide-pin when running is remarkably prevented.

Moreover, dispersion properties in the polyester of the crosslinked polymer particles and the multi-layer organic particles are remarkably improved as unexpected effect.

The crosslinked polymer particles used in the present invention possess heat resistance property.

The loss in weight after treating the crosslinked polymer particles at 300 °C for 30 minutes is 30 weight % or less, preferably 20 weight % or less. The particles having a loss in weight of more than 30 weight % is not preferred because the particles are melted and decomposed in the preparation of the polyester moldings.

The average particle size of the crosslinked polymer particles used in the present invention is in the range from 0.01 to 2 µm. If the mean particle size is less than 0.01 µm, the running property of the films is not sufficiently improved.

The crosslinked polymer particles are prepared by, for example, the methods as follows.

The above particles are prepared by the method of polymerizing a monomer having ethylene glycol unit in the molecule, for example, the compound represented by the formula (I):

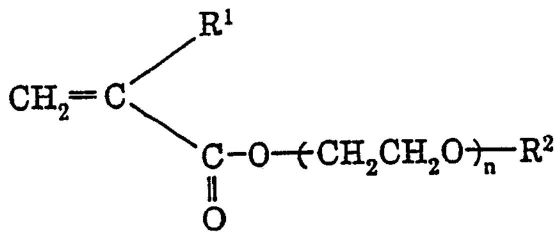

(I)

wherein $R^1$ represents hydrogen atom or $C_1$-$C_4$ alkyl group of straight or branched chain, $R^2$ represents hydrogen atom, or

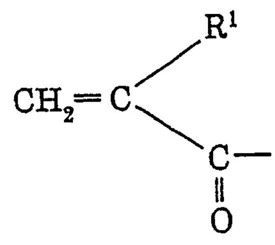

and n represents the integer of 1 or more, preferably 1 to 4 , or copolymerizing the above compound and a compound which can copolymerize with the above compound.

The preferred compounds represented by the formula (I) are, for example, ethylene glycol monoacrylate, ethylene glycol methacrylate, ethylene glycol diacrylate, ethylene glycol dimethacrylate. As the compounds copolymerizable with the above compounds, acrylic acid esters such as methyl acrylate, ethyl acrylate, methacrylic acid esters such as methyl methacrylate, ethyl methacrylate, aromatic vinyl compounds such as styrene, ethylvinylbenzene, divinylbenzene are cited, but the compounds available for the present invention are not limited to them.

The crosslinked polymer is obtained from the polymerization of the above-cited compounds. And, the soap-free polymerization method is preferably adopted.

For example, firstly a given amount of a water-soluble polymerization initiator is dissolved in an aqueous medium. A previously purified compound represented by the formula (I) and a compound copolymerizable with the compound represented by the formula (I), which is optionally used, are blended uniformly, then, added to the above solution. The bath ratio (the proportion of monomer/water) is usually in the range from 1/30 to 1/5. If the bath ratio is less than 1/30, it is not preferred because productivity is inferior. If the bath ratio is more than 1/5, it is also not preferred because agglomerated particles are likely to be produced.

Then, the compounds added to the above solution are polymerized at a decomposition initiating temperature of polymerization initiator or higher, preferably at 40 to 80°C for 6 to 8 hours under stirring in a vessel.

Agglomerated particles are generated according to a monomer composition employed. In such a case, a very small amount of surfactant can be added as a dispersing stabilizer so that the concentration thereof is lower than the critical micelle concentration in order to retain the dispersing stability of particles. As the water-soluble polymerization initiator, the redox type initiator such as hydrogen peroxide, potassium persulfate and potassium persulfate-sodium thiosulfate can be used. Thus, the aqueous slurry containing crosslinked polymer of an average particle size of 0.01 to 2 µm is usually prepared.

The crosslinked polymer particles are usually added to the polyester as an ethylene glycol slurry. The ethylene glycol slurry is obtained from a procedure in which an aqueous slurry containing the crosslinked polymer particles are centrifuged, washed, then, the particles obtained are dispersed in ethylene glycol, and the dispersion is distilled till water content becomes 1% or less, or a procedure in which an aqueous slurry containing the crosslinked polymer particles is added to ethylene glycol, and the mixture is distilled till water content becomes 1% or less.

In any way, it is preferred that the crosslinked polymer particles are prepared as ethylene glycol-slurry.

It is preferred that the crosslinked polymer particles are actually insoluble and infusible under high temperature in synthesis and molding of the polyester. That is, it is preferred that the crosslinked polymer particles are scarcely soluble even at high temperature in a compound, for example, alcohols such as methanol and ethanol, glycols such as ethylene glycol, propylene glycol and 1,4-butane diol, bis-(β-hydroxyethyl) terephthalate and its oligomer with which the particles are possible to contact during the synthesis of polyester, and even in the polyester.

The content of the crosslinked polymer in polyester are in the range from 0.005 to 1 weight %, preferably from 0.03 to 0.6 weight %. If the content is less than 0.005 weight %, the effect of improving abrasion resistance and running property of a film to be produced therefrom is not sufficiently provided. If more than 1 weight %, it is not preferred because electro-magnetic transducing property required when applied to a support of magnetic recording medium is deteriorated and dropouts occur frequently.

The organic particle which constitutes the core of the multi-layered organic particles used in the present invention comprises homopolymer or copolymer of acrylic acid esters such as methyl acrylate and ethyl acrylate, methacrylic acid esters such as methyl methacrylate and ethyl methacrylate, aromatic vinyl

compounds such as styrene, ethylvinylbenzene, divinylbenzene.

The core organic particles are preferred to possess solvent- and heat resistance of a degree that a part of the particles do not dissolve and do not deform when covered with the crosslinked polymer having ethylene glycol unit. The crosslinked polymer covering the core organic particle is a polymer of the compound represented by the formula (I), or a copolymer of the compound represented by the formula (I) and the above-described compound copolymerizable therewith.

The thickness of the layer of the crosslinked polymer is preferably in the range from 0.02 to 0.5 µm. If the thickness is less than 0.02 µm, the effect to prevent the agglomeration of the core organic particles during coating treatment is not provided sufficiently. When the thickness is more than 0.5 µm, it is not preferred because that the agglomeration of the particles tend to occur during coating treatment.

The multi-layer organic particles are preferred to be substantially insoluble and infusible at high temperature in synthesis or molding of polyester, similarly to the case of the cross linked polymer particles. That is to say, the loss in weight of the multi-layer organic particles after treated at 300°C for 30 minutes is usually 30 weight % or less, preferably 20 weight % or less. If it is more than 30 weight %, the particles are to be dissolved or deformed in molding process of polyester.

The average particle size of the particles is in the range from 0.05 to 3 µm, preferably from 0.05 to 2 µm, more preferably from 0.1 to 1.5 µm. If it is less than 0.05 µm, the running property of a film to be produced is not sufficiently improved. If it is more than 3 µm, a film to be produced is insufficient in surface flatness which is required in a magnetic recording medium, thereby causing deterioration in electro-magnetic transducing property and occurrence of dropout.

The content of the multi-layer organic particles contained in the polyester are in the range from 0.005 to 1 weight %, preferably from 0.03 to 0.6 weight %. If it is less than 0.005 weight %, abrasion resistance and running properties of a film to be produced are not improved. On the other hand, if it is more than 1 weight %, electro-magnetic transducing property tends to deteriorate and dropouts are generated because of insufficiency of the surface flatness which is required in magnetic recording medium.

The multi-layer organic particles possessing the above properties can be prepared by the method as follows.

First, the organic particles which are to be cores are obtained by polymerizing or copolymerizing compounds, for example, acrylic acid esters such as methyl acrylate and ethyl acrylate, methacrylic esters such as methyl methacrylate and ethyl methacrylate, aromatic vinyl compounds such as styrene, ethylvinylbenzene, divinylbenzene (the 1st stage polymerization).

As the polymerization method, soap free polymerization method is preferred. For example, a given amount of a water-soluble polymerization initiator, which is redox type initiator, for example, hydrogen peroxide, potassium persulfate, and potassium persulfate-sodium thiosulfate, is dissolved in an aqueous medium. Styrene, methyl methacrylate and divinylbenzene previously purified by usual method are blended uniformly in a given proportion, and added to the above aqueous solution.

The bath ratio (the proportion of monomer/water) is preferably 1/15 to 1/5. If it is more than 1/5, agglomerated particles are tend to increase. A part of the particles may be agglomerated according to a monomer composition employed. In such a case, a small amount of surfactant may be added as the dispersion stabilizer, the concentration of which being critical micelle concentration or less. The polymerization in the first stage is carried out at a decomposition initiating temperature of polymerization initiator or higher, preferably 40 to 80°C under stirring with the conversion of 95% or more. In this case, spherical core particles can be obtained.

The above core particles obtained in the first stage of polymerization, for example, the particles of styrene/divinylbenzene copolymer, the particle size of which is easily controlled, is not preferred to be directly added to the polyester, because the remarkable agglomeration of particles inhibits the effects of improving running property and abrasion resistance which are the objects of the present invention.

Then, ethylene glycol dimethacrylate/methyl methacrylate/divinylbenzene purified previously by a usual method are blended uniformly in a given proportion, and it is added to the reaction system. And then, the second stage polymerization is carried out at 40 to 80°C under stirring with a polymerization rate of 95% or more, thereby coating the core organic particles obtained in the first stage with the crosslinked polymer having ethylene glycol unit comprising ethylene glycol dimethacrylate, methyl methacrylate and divinylbenzene. The above particles are spherical and are obtained as aqueous slurry dispersion.

The multi-layer organic particles are preferred to be added in the form of ethylene glycol slurry. The above ethylene glycol slurry can be prepared by the method similar to the preparation of the crosslinked polymer particles.

It is easily confirmed that the above organic particles coated with the crosslinked polymer having ethylene glycol unit actually have the multi-layer structure. For example, the method is as follows.

Multi-layer organic particles comprising styrene/divinylbenzenecopolymer cores coated with the crosslinked polymer having ethylene glycol unit constituted from ethylene glycol dimethacrylate, methyl methacrylate and divinylbenzene are subjected to methanolysis at 200 °C for 4 hours in a micro bombe. After the reaction, the content (methanol-slurry) is taken out. Then, the slurry is centrifuged by an ultra centrifuge '55P-72' (sold from Hitachi Koki Co., Ltd.).

Ethylene glycol derived from the ethylene glycol unit in the crosslinked polymer coating the core particles can be detected by quantifying ethylene glycol in supernatant fluid using gas chromatography (column : chromosorb 101 3%, column length 1 m).

Infrared absorbing spectrum of the multi-layer organic particles shows absorption peaks based on esterbonding of ethylene glycol dimethacrylate and methyl methacrylate at 1725 $cm^{-1}$ and 1300 to 1150 $cm^{-1}$. But, the above peaks are not found in the particles after methanolysis.

The thickness of the coating layer of the crosslinked polymer can be calculated from the difference in the particle size before and after methanolysis.

In the present invention, the crosslinked polymer particles and multi-layer organic particles are preferred to be spherical and have narrow particle size distribution. The term 'spherical' in the present invention means that the volumetric shape parameter defined in the following equation (II):

Volumetric shape parameter = $V/D^3$ (II)

wherein V represents the measured volume of particles ($\mu m^3$) and D represents the maximum projected diameter of the projection of the particles ($\mu m$), is in the range from 0.3 to $\pi/6$, preferably from 0.4 to $\pi/6$. When using such particles described above, running property of the film is remarkably improved.

The particle size distribution index (r) of the crosslinked polymer particles defined by the following formula (III):

$$r = \frac{d_{25}}{d_{75}} \quad \text{(III)}$$

wherein $d_{25}$ is the particle size of the crosslinked polymer particle when the cumulative weight thereof is 25% of the total weight of the particles, $d_{75}$ is the particle size of the crosslinked polymer particle when the cumulative weight thereof is 75% of the total weight of the particles, the particle size being measured under an electron microscope and the cumulative weights being calculated beginning with the largest particle, is preferably 2.0 or less, more preferably from 1.1 to 2.0.

If the value of (r) is more than 2.0, it is not preferred because the surface roughness of a film produced increases and coarse particles also increase because of the irregularity of the particle size.

The polyester composition of the present invention which contains the crosslinked polymer particles or the multi-layer organic particles may be prepared by the following method.

Polyester can be prepared by the usual polymerization of terephthalic acids or ester forming derivatives thereof such as dimethyl terephthalate, and ethylene glycol as main starting substances. A process for producing polyester usually consists of two steps which are the step for obtaining polyester oligomer after ester-exchange reaction or esterification reaction, and the step for carrying out the polycondensation reaction. In this case, as ester-exchange catalysts, one or more of known catalyst, for example, calcium compounds, zinc compounds, manganese compounds, lithium compounds can be used. After substantially completing ester-exchange reaction or esterification reaction one or more kinds of phosphorous compounds can also be added as controlling or heat stabilizing agents for deposited particles.

As polymerization catalyst, one or more kinds of known catalyst such as antimony compounds, germanium compounds, titanium compounds, tin compounds, cobalt compounds, and so on can be used, especially antimony compounds and germanium compounds are preferred.

The crosslinked polymer particles or multi-layer organic particles are added preferably before the intermediate stage of polycondensation reaction, especially before ester-exchange reaction or before initiation of polycondensation reaction.

The crosslinked polymer particles or multi-layer organic particles are preferred to be added in the form of ethylene glycol slurry. It is needless to say that the crosslinked polymer particles or multi-layer organic particles can be added after reacting with ethylene glycol.

The polyester composition of the present invention can be obtained by the method described above.

The polyester composition thus obtained can be prepared, after mixing or without mixing other polyester, to be in the form of films by the method as follows. For example, polyester tips are melt and extruded into film shapes at 270 to 300 °C. It is cooled and solidified at 40 to 70 °C to obtain amorphous

sheets. Then, the sheet is subjected to simultaneous or successive biaxial stretching in the machine and transverse directions, and heat-treated at 160 to 240 °C to obtain biaxially stretched films. (Japanese Patent Publication 30-5639 (1955)).

As described above, the polyester composition of the present invention containing particles of the specific crosslinked polymer having ethylene glycol unit on the specific multi-layer organic particles coated with the crosslinked polymer having ethylene glycol unit are quite useful for the supports of magnetic recording medium such as tape, floppy disk, or the supports of condenser, photographic plate, electric insulator, thermo-sensitive transfer paper, packaging material, transfer mark, tinsel yarn.

The present invention are explained in more detail by the following non-limitative examples. In examples and comparative examples, part means weight part.

The measuring methods used in the examples are as follows.

### Ethylene glycol unit

The ethylene glycol unit in the crosslinked polymer indicates $-CH_2-CH_2-O-$, and the content in the polymer was calculated by the following equation.

$$\text{The content of ethylene glycol unit (\%)} = \frac{\text{The weight of ethylene glycol unit}}{\text{The weight of the crosslinked polymer}} \times 100$$

### Average particle size

The weight-distribution curve of the 1000 particles was obtained, in which each particle was assumed as a sphere having, as the diameter thereof, the largest particle size measured by electron microphotographic method. The average particle size was determined as the diameter of the particle corresponding to the weight fraction of 50%.

### Loss in weight

The loss in weight of the crosslinked polymer particles and the multi-layer organic particles was determined by the following equation after heating from room temperature to 300 °C at a rate of 10 °C/min and holding at 300 °C for 30 minutes under flow of $N_2$ gas (200 ml/min), using heat-analysing apparatus 'DT-20Bs, (Shimazu Seisakusho Co.).

$$\text{Loss in weight (weight \%)} = \frac{\text{weight before heating} - \text{weight after heating}}{\text{weight before heating}} \times 100$$

### Surface roughness (Ra)

Surface roughness was represented by the average center line surface roughness Ra (μm). Ra was determined in the following way by using a surface roughness meter (SE-3FK) made by Kosaka Kenkyusho Co., Ltd. From the film surface roughness curve (sectional curve of film) a portion with a standard length L

(2.5 mm) in the direction of center line was taken out. Expressing the roughness curve as Y = f(x) with the center line of the portion taken out representing the X axis and the direction vertical to the center line representing the Y axis, the value given from the following formula was presented as Ra (µm):

$$Ra = \frac{1}{L}\int_0^L |f(x)|dx$$

The radius of the end of the feeler was 2 µm, the load was 30 mg, and cut-off value was 80 µm. Ra shown here is the average of the measurements at total 10 points, 5 points in the machine direction and 5 points in the transverse direction.

Running property (µd)

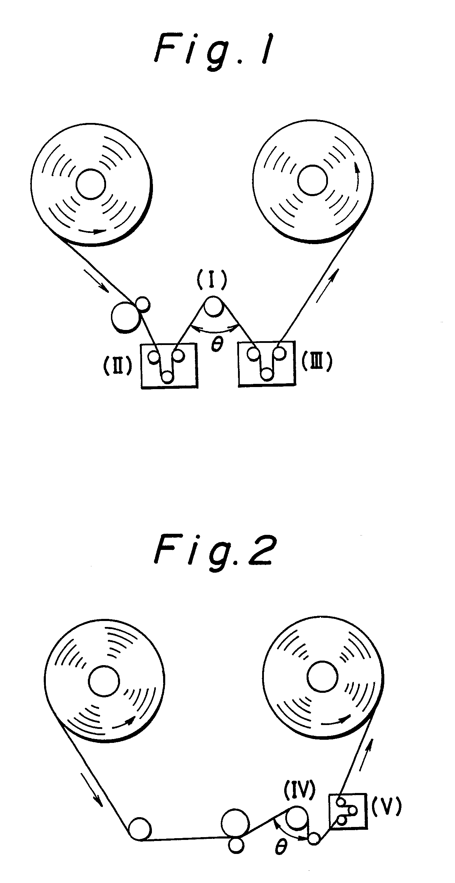

By using the apparatus shown in Fig. 1, a film was contacted with a fixed hard chrome-plated metal roll (6 mm in diameter) at a winding angle ($\theta$) of 135°, and with a load ($T_2$) of 53 g applied to one end, the film was let run at a speed of 1 m/min. The resisting force ($T_1$(g)) at the other end was measured, and the coefficient of friction (µd) in running of the film was determined from the following formula:

$$\mu d = \frac{180}{\pi\theta} \ell n\left(\frac{T_1}{T_2}\right) = 0.424\ \ell n\left(\frac{T_1}{53}\right)$$

Abrasion resistance

By using a film running system shown in Fig. 2, the film was let run through a distance of 200 meters, and the amount of worn-out white powder adhering to a 6 mmø hard chrome-made fixed pin was visually observed and evaluated on the following criterion. Film speed was 10 m/min and film tension was about 200 g. The angle ($\theta$) was 135° C.

Rank A: No white powder adhered to the pin.
Rank B: White powder adhered slightly.
Rank C: A small amount (greater than Rank B) of white powder adhered.
Rank D: White powder adhered heavily.

Number of large protuberances

The film surface was deposited with aluminum and examined with a double beam interference microscope. The protuberances showing the 2nd order interference fringes at a measuring wavelength of 0.54 µm ($H_2$) were supposed to have a height of 0.54 to less than 0.81 µm, and the number of protuberances showing interference fringes of 3rd and higher orders (H3) were counted per 25 $cm^2$ at a measuring wavelength of 0.54 µm.

Affinity

The degree of affinity between particles and polyester are evaluated by the degree of generation of voids owing to stretching on a given condition.

That is, a non-oriented film having a thickness of 300 µm is stretched 3.5 times in both the machine and transverse directions at 95° C. And the ratio of the mean value of the major axis and miner axis of a particle in the film against the mean value of the major axis and minor axis of the void formed around the particle was obtained.

The affinity between the particles and polyesters are evaluated by obtaining the arithmetical mean of the above value on particles. The nearer the value goes to 1, the fewer the voids formed, thus the good affinity is provided. The stretching speed of 7000%/min was adopted.

Example 1

[Preparation of crosslinked polymer particles]

Potassium persulfate (0.32 part) as water-soluble polymerization initiator and EMAL 0 (0.0004 part) (sodium lauryl sulfate, Kao Atlas Co.) as dispersing stabilizer were added to desalted water (120 parts), and were dissolved uniformly. And, ethylene glycol dimethacrylate (7 parts), methyl methacrylate (2 parts) and divinylbenzene (1 part) were added to the solution.

Then, the polymerization was carried out at 70°C for 6 hours with stirring under the atmosphere of $N_2$ gas.

The conversion was 99% and the average particle size of the particles obtained was 0.3 µm. Ethylene glycol (190 parts) was added to the aqueous slurry of the crosslinked polymer particles produced, and water was removed under the condition of heating and reduced pressure. Water content of ethylene glycol slurry of the crosslinked polymer particles was 0.3 weight %.

[Preparation of Polyester film]

Dimethyl terephtharate (100 parts), ethylene glycol (60 parts), and magnesium acetate tetrahydrate (0.09 part) were subjected to ester-exchange reaction, with raising temperature and removing methanol from the reaction system. The reaction was substantially completed when the temperature was raised to 230°C over 4 hours. Then, ethylene glycol slurry (2 parts) of the crosslinked polymer paeticles having an average particle size of 0.3 µm was added, and polycondensation reaction was carried out after adding ethyl acid phosphate (0.04 part) and antimony trioxide (0.03 part) for 4 hours. Thus, polyethylene terephthalate composition of intrinsic viscosity of 0.66 was obtained.

A sheet of thickness 220 µm was prepared by an extruder after drying polyester composition obtained under the atmosphere of $N_2$ gas at 180°C for 6 hours.

Then, it was stretched 3.7 times in the machine directions and 4.0 times in the transverse direction, and followed by heat-setting at 220°C for 5 sec to obtain a biaxially stretched film of 15 µm thickness.

Example 2

A polyester film was obtained from the same procedure as Example 1, except that the monomer composition for the crosslinked polymer was changed to ethylene glycol dimethacrylate (5 parts), methyl methacrylate (4 parts), and divinylbenzene (1 part).

Example 3

A polyester film was obtained from the same procedure as Example 1, except that the monomer composition for the crosslinked polymer was changed to ethylene glycol dimethacrylate (2 parts), styrene (7 parts), and divinylbenzene (1 part), and the addition amount of the ethylene glycol slurry was changed to 1 part.

Example 4

A polyester film was obtained from the same procedure as Example 3, except that the addition amount of the ethylene glycol slurry was changed to 2 parts.

Example 5

A polyester film was obtained from the same procedure as Example 1, except that the monomer composition for the crosslinked polymer was changed to ethylene glycol dimethacrylate (8 parts) and methyl methacrylate (2 parts).

Example 6

A polyester film was obtained from the same procedure as Example 1, except that the monomer composition for the crosslinked polymer was changed into ethylene glycol dimethacrylate (10 parts).

Comparative example 1

A polyester film was obtained from the same procedure as Example 1, except that the monomer composition for the crosslinked polymer was changed to methyl methacrylate (9 parts), and divinylbenzene (1 part).

Comparative example 2

A polyester film was obtained from the same procedure as Example 1, except that the monomer composition for the crosslinked polymer was changed to styrene (9 parts) and divinylbenzene (1 part).

Comparative example 3

A polyester film was obtained from the same procedure as Example 1, except that the ethylene glycol slurry of the crosslinked polymer particles was changed to a 10 wt% ethylene glycol slurry (3 parts) of kaolin particles(average particle size of 0.6 µm).

Comparative example 4

A polyester film was obtained from the same procedure as Example 1, except that the ethylene glycol slurry of the crosslinked polymer particles was changed to a 10 wt% ethylene glycol slurry (3 parts) of calcium carbonate particles(average particle size of 0.6 µm).

Comparative example 5

A polyester film was obtained from the same procedure as Example 1, except that the ethylene glycol slurry of the crosslinked polymer particles changed to a 10 wt% ethylene glycol slurry (3 parts) of titanium oxide particles (average particle size of 0.3 µm).

The results obtained are shown in Table 1.

Table 1

| | Particles added: Kinds of particles | Particles added: Composition (wt%) | Particles added: Ethylene glycol unit (wt%) | Particles added: Particle size (μm) | Particles added: Amount added (wt%) | Particles added: Loss in weight (wt%) | Surface roughness Ra | Running property μd | Abrasion resistance | Number of coarse protuberances ($F_3$ or more) | Affinity |
|---|---|---|---|---|---|---|---|---|---|---|---|
| Example-1 | Crosslinked polymer particles | EGDM/MMA/DVB (70/ 20/ 10) | 17.9 | 0.3 | 0.1 | 17.0 | 0.006 | 0.36 | A | 1 | 0.9 or more |
| -2 | Crosslinked polymer particles | EGDM/MMA/DVB (50/ 40/ 10) | 14.2 | 0.3 | 0.1 | 14.2 | 0.007 | 0.35 | A | 1 | 0.9 or more |
| -3 | Crosslinked polymer particles | EGDM/ST/DVB (20/ 70/ 10) | 7.0 | 0.6 | 0.05 | 3.2 | 0.009 | 0.29 | A | 2 | 0.9 or more |
| -4 | Crosslinked polymer particles | EGDM/ST/DVB (20/ 70/ 10) | 7.0 | 0.6 | 0.1 | 3.2 | 0.013 | 0.25 | A | 4 | 0.9 or more |
| -5 | Crosslinked polymer particles | EGDM/MMA (80 / 20) | 19.8 | 0.3 | 0.1 | 18.1 | 0.007 | 0.35 | A | 2 | 0.9 or more |
| -6 | Crosslinked polymer particles | EGDM (100) | 22.2 | 0.3 | 0.1 | 16.5 | 0.006 | 0.35 | A | 1 | 0.9 or more |
| Comparative example-1 | Crosslinked polymer particles | MMA/DVB (90 / 10) | 0 | 0.3 | 0.1 | 4.1 | Primary particle size was 0.3μm. Film formation was difficult because of formation of a large number of secondary particles. | | | | |
| -2 | Crosslinked polymer particles | ST/DVB (90 / 10) | 0 | 0.6 | 0.1 | 2.1 | Primary particle size was 0.6μm. Film formation was difficult because of formation of a large number of secondary particles. | | | | |
| -3 | Kaolin | — | — | 0.6 | 0.3 | — | 0.018 | 0.38 | C | 20 | 0.6 |
| -4 | Calcium carbonate | — | | 0.6 | 0.3 | — | 0.017 | 0.27 | C | 35 | 0.5 |
| -5 | Titanium oxide | — | — | 0.3 | 0.3 | — | 0.009 | 0.31 | D | 11 | 0.5 |

EGDM : Ethylene glycol dimethacylate
MMA : Methyl methacrylate
ST : Styrene
DVB : Divinylbenzene

As seen from the results in Table 1, the films obtained from the polyester compositions of the present invention, which contain the particles of a specific particle size comprising the crosslinked polymer having a specific amount of ethylene glycol unit, contain quite little amount of coarse protuberances and are excellent in the dispersibility of the particles and the affinity between the paricles and polyester. Further, the films have excellent running property and abrasion resistance which are important properties for a film.

On the other hand, the particles of the crosslinked polymer obtained in Comparative Exaples 1 and 2, which polymer has no ethylene glycol unit, easily agglomerate to form a large number of coarse secondary particles and have a poor dispersibility. The polyester composition containing such particles is very difficult to be formed into film, and the properties of a film obtained with much difficulty are quite insufficient for practical use.

In the case where inactive inorganic particles such as kaolin, calcium carbonate, and titanium oxide are added to polyester as in Comparative Exmaples 3 to 5, the films obtained are excellent in running properties, however, contain a large number of coarse particles and have a poor abrasion resistance.

Example 7

[Preparation of multi-layer organic particles]

First, core polymer particles were prepared. Potassium persulfate (0.32 part) as water-soluble polymerization initiator and EMAL O (sodium lauryl sulfate, Kao Atlas Co.) (0.0004 part)as dispersion stabilizer were added to desalted water (120 parts),and dissolved uniformly. And, ethylene glycol methacrylate (7 parts), methyl methacrylate (2 parts), and divinylbenzene (1 part) were added thereinto.

Then, polymerization was carried out for 6 hours with stirring after raising the temperature to 70° C under the atmosphere of $N_2$ gas. The conversion was 90% and the average particle size of the polymer particles was 0.27 $\mu$m.

Moreover, a homogenous mixture of desalted water (60 parts), ethylene glycol dimethacrylate (3.5 parts), methyl methacrylate (1 part) and divinylbenzene (0.5 part) was added to the reaction system, and was polymerized at 70° C for 6 hours. The conversion was 99.8%, and the average particle size of multi-layer organic particles was 0.31 $\mu$m.

Ethylene glycol (285 parts) was added to the aqueous slurry of the multi-layer organic particles obtained above, and the water was removed under heating and reduced pressure. The water content in ethylene glycol slurry of the multi-layer polymer particles was 0.3 weight %.

[Preparatin of polyester film]

Ester exchange reaction was carried out in the composition of dimethyl terephthalate (100 parts), ethylene glycol (60 parts), and magnesium acetate tetrahydrate (0.09 part) by heating and removing methanol in a reaction vessel. The reaction was completed when the temperature was raised to 230° C over 4 hours. Then, after adding the ethylene glycol slurry (2 parts) of the multi-layer organic particles (average particle size of 0.31 $\mu$m), the polycondensation reaction was carried out with adding ethyl acid phosphate (0.04 part) and antimony trioxide (0.035 part) for 4 hours. Thus, a polyethylene terephthalate composition having an intrinsic viscosity of 0.66 was obtained.

The polyester composition obtained was extruded after drying at 180° C for 6 hours under atmosphere of $N_2$ gas into a sheet having thickness of 220 $\mu$m. Then, the sheet was stretched 3.7 times in the machine direction, and 4.0 times in the transverse direction. Then a biaxially stretched polyester film of a thickness of 15 $\mu$m was obtained after heat-setting at 220° C for 5 seconds.

Example 8

A polyester film was obtained from the same procedure as Example 7, except that the monomer composition for the coating polymer was changed to ethylene glycol dimethacrylate (2.5 parts), methyl methacrylate (2 parts), and divinylbenzene (0.5 part).

Example 9

A polyester film was obtained from the same procedure as Example 7, except that the monomer composition for the core polymer was changed to styrene (9 parts) and divinylbenzene (1 part).

Example 10

A polyester film was obtained from the same procedure as Example 9, except that the monomer composition for the coating polymer was changed to ethylene glycol dimethacrylate (3.5 parts), methyl methacrylate (1 part), and divinylbenzene (0.5 part).

Comparative example 6

A polyester film was obtained from the same procedure as example 7, except that the multi-layer organic particles were changed to the core polymer paticles having no coating.

Comparative example 7

A polyester film was obtained from the same procedure as example 9, except that the multi-layer organic particles were changed to the core polymer paticles having no coating.

Comparative example 8

A polyester film was obtained from the same procedure as example 7, except that the monomer composition for the coating polymer was changed to methylmethacrylate (4.5 parts), and divinylbenzene (0.5 part).

Comparative example 9

A polyester film was obtained from the same procedure as Example 9, except that the monomer composition for the coating polymer was changed to methylmethacrylate (4.5 parts), and divinylbenzene (0.5 part).

Comparative example 10

A polyester film was obtained from the same procedure as Example 7, except that a 10 wt% ethylene glycol slurry (3 parts) of Kaolin of a particle size of 0.62 µm was used instead of the ethylene glycol slurry of the multi-layer organic particles.

Comparative example 11

A polyester film was obtained from the same procedure as example 7, except that a 10 wt% ethylene glycol slurry (3 parts) of calcium carbonate having a particle size of 0.61 µm was used instead of the ethylene glycol slurry of the multi-layer organic particles.

Comparative example 12

A polyester film was obtained from the same procedure as Example 7, except that a 10 wt% ethylene glycol slurry (3 parts) of titanium oxide having a particle size of 0.29 µm was used instead of the ethylene glycol slurry of the multi-layer organic particles.

The results obtained are shown in Table 2.

Table 2

| | Particles added: Kinds of particles | Particles added: Composition of core particles *1 | Particles added: Coating polymer: Composition *1 | Particles added: Coating polymer: EG unit (%) | Particles added: Particle size (µm) | Particles added: Amount added (weight %) | Particles added: Loss in weight (%) | Surface roughness Ra | Running property µd | Abrasion resistance | Number of coarse protuberances F3 or more | Affinity |
|---|---|---|---|---|---|---|---|---|---|---|---|---|
| Example 7 | Multi-layer organic particles | ST/MMA/DVB (70/20/10) | EGDM/MMA/DVB (70/20/10) | 17.9 | 0.31 | 0.1 | 6.5 | 0.006 | 0.36 | A | 1 | 0.9 or more |
| Example 8 | Multi-layer organic particles | ST/MMA/DVB (70/20/10) | EGDM/MMA/DVB (50/40/10) | 14.2 | 0.30 | 0.1 | 8.2 | 0.006 | 0.36 | A | 1 | 0.9 or more |
| Example 9 | Multi-layer organic particles | ST/DVB (90/10) | EGDM/MMA/DVB (70/20/10) | 17.9 | 0.60 | 0.1 | 3.0 | 0.016 | 0.23 | A | 3 | 0.9 or more |
| Example 10 | Multi-layer organic particles | ST/DVB (90/10) | EGDM/MMA/DVB (50/40/10) | 14.2 | 0.61 | 0.1 | 4.2 | 0.015 | 0.24 | A | 4 | 0.9 or more |
| Comparative example 6 | Organic particles | ST/MMA/DVB (70/20/10) | — | — | 0.28 | 0.1 | 4.0 | Agglomeration of particles in polymer was quite remarkable. Film formation was difficult. | | | | |
| Comparative example 7 | Organic particles | ST/DVB (90/10) | — | — | 0.27 | 0.1 | 2.0 | Agglomeration of particles in polymer was quite remarkable. Film formation was difficult. | | | | |
| Comparative example 8 | Multi-layer organic particles | ST/MMA/DVB (70/20/10) | MMA/DVB (90/10) | 0 | 0.31 | 0.1 | 5.0 | Agglomeration of particles in polymer was quite remarkable. Film formation was difficult. | | | | |
| Comparative example 9 | Multi-layer organic particles | ST/DVB (90/10) | MMA/DVB (90/10) | 0 | 0.31 | 0.1 | 4.5 | Agglomeration of particles in polymer was quite remarkable. Film formation was difficult. | | | | |
| Comparative example 10 | Kaolin | — | — | — | 0.62 | 0.3 | — | 0.018 | 0.38 | C | 20 | 0.6 |
| Comparative example 11 | Calcium carbonate | — | — | — | 0.61 | 0.3 | — | 0.017 | 0.27 | C | 35 | 0.5 |
| Comparative example 12 | Titanium oxide | — | — | — | 0.29 | 0.3 | — | 0.009 | 0.31 | D | 11 | 0.5 |

*1
- EGDM : Ethylene glycol dimethacrylate
- MMA : Methyl methacrylate
- ST : Styrene
- DVB : Divinylbenzene
- EG : Ethylene glycol

As seen from the results of Table 2, the films obtained from the polyester compositions of the present invention, which contain the multi-layer organic polymer particles having a coating of the crosslinked polymer having ethylene glycol unit, contain quite little amount of coarse protuberances and are excellent in the dispersibility of the particles and the affinity between the paricles and polyester.

On the other hand, the particles in Comparative Examples 6 to 9, which are not coated with the crosslinked polymer having ethylene glycol unit, easily agglomerate to form a large number of coarse secondary particles and have a poor dispersibility. The polyester composition containing such particles is very difficult to be formed into film, and the properties of a film obtained with much difficulty are quite insufficient for practical use.

In the case where inactive inorganic particles such as kaolin, calcium carbonate and titanium oxide are added to polyester as in Comparative Exmaples 10 to 12, the films obtained are excellent in running properties, however, contain a large amount of coarse particles and have a poor abrasion resistance.

## Claims

1. A polyester composition comprising polyester and 0.005 to 1% by weight, based on said composition, of particles having an average particle size of 0.01 to 2 µm which comprises a crosslinked polymer having ethylene glycol unit in the molecular chain thereof, or 0.005 to 1% by weight, based on said composition, of multi-layer organic particles having an average particle size of 0.05 to 3 µm which comprises a core organic particle and a coating layer of said crosslinked polymer, the loss in weight after heat treatment at 300 °C for 30 min of said crosslinked polymer particles and said multi-layer organic particles being not higher than 30%.

2. The polyester composition according to claim 1, wherein said crosslinked polymer is a polymer selected from the group consisting of polymers of the compound represented by the following formula (I):

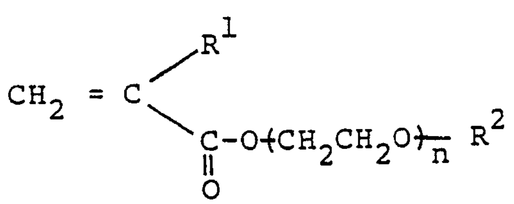

(I)

wherein $R^1$ is a hydrogen atom or $C_1$ - $C_4$ alkyl group of straight or branched chain, $R^2$ is a hydrogen atom or

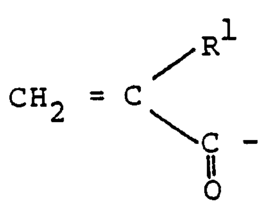

and n is an integer of 1 or more,
and copolymers of the compound represented by the formula (I) and a compound copolymerizable with the compound represented by the formula (I).

3. The polyester composition according to claim 2, wherein said compound represented by the formula (I) is a member selected from the group consisting of ethylene glycol monoacrylate, ethylene glycol diacrylate, ethylene glycol monomethacrylate and ethylene glycol dimethacrylate.

4. The polyester composition according to claim 2, wherein said compound copolymerizable with the compound represented by the formula (I) is a member selected from the group consisting of acrylic acid esters, methacrylic acid esters and aromatic vinyl compounds.

5. The polyester composition according to claim 1, wherein said core organic particles comprises a polymer selected from the group consisting of homopolymers and copolymers of acrylic acid esters, methacrylic acid esters or aromatic vinyl compounds.

6. The polyester composition according to claim 1, wherein the volumetric shape parameter of said crosslinked particles or said multi-layer organic particles, which is represented by the formula (II):

$$\text{Volumetric shape parameter} = \frac{V}{D^3} \qquad \text{(II)}$$

wherein V is the measured volume ($\mu m^3$) of the particles and D is the maximum projected diameter ($\mu m$) of the projection of the particles.

7. The polyester composition according to claim 1, wherein the particle size distribution index(r) of said crosslinked polymer particles or said multi-layer organic particles, which is represented by the formula, (III):

$$r = \frac{d_{25}}{d_{75}} \qquad \text{(III)}$$

wherein $d_{25}$ is the diameter of the particle when the cumulative weight thereof is 25% of the total weight of said particles, $d_{75}$ is the diameter of the particle when the cumulative weight thereof is 75% of the total weight of said particles, said diameters being measured by an electron microphotograph and said cumulative weight being calculated beginning with the largest particle size.

Fig. 1

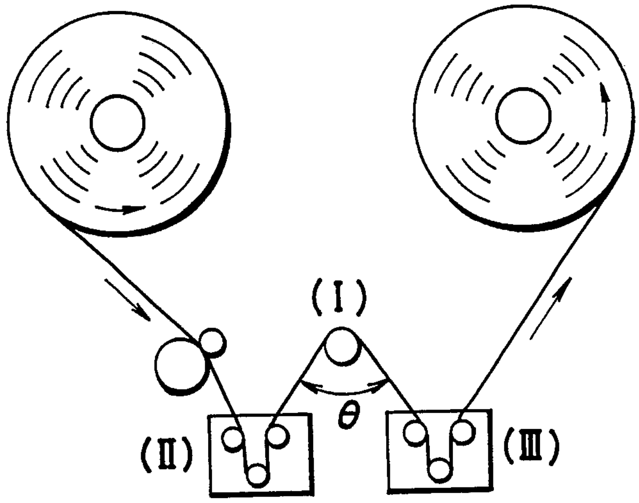


Fig. 2